# EUROPEAN PATENT SPECIFICATION

(11) **EP 1 761 609 B1**
(45) Date of publication and mention of the grant of the patent: **21.05.2008**
(21) Application number: 05747654.1
(22) Date of filing: 11.05.2005
(51) Int. Cl.: C09D 11/00, C09B 67/00

(54) **AQUEOUS INKJET INK COMPOSITIONS COMPRISING COMB-BRANCHED COPOLYMERS**
WÄSSRIGE TINTENSTRAHLDRUCKTINTENZUSAMMENSETZUNGEN MIT KAMMVERZWEIGTEN COPOLYMEREN
COMPOSITIONS D'ENCRE AQUEUSE DESTINEES A UNE IMPRIMANTE A JET D'ENCRE ET CONTENANT DES COPOLYMERES RAMIFIES EN FORME DE PEIGNE

(30) Priority: 11.05.2004 US 843018
(43) Date of publication of application: 14.03.2007
(73) Proprietor: Cabot Corporation, Boston MA 02210-2019 (US)
(72) Inventor: VIOLA, Michael, S., Burlington, MA 01803 (US)
(74) Representative: Trueman, Lucy Petra
(86) International application number: PCT/US2005/016540
(87) International publication number: WO 2005/111160

(56) References cited:
- EP-A- 0 826 751
- EP-A- 1 323 788
- US-A- 5 736 606
- US-B1- 6 582 510

## Description

### 1. Field of the Invention.

The present invention relates to aqueous inkjet ink compositions and methods of generating images using these compositions.

### 2. Description of the Related Art.

An inkjet ink composition generally consists of a vehicle, which functions as a carrier, and a colorant such as a dye or pigment. Additives and/or cosolvents can also be incorporated in order to adjust the inkjet ink to attain the desired overall performance properties.

In general, pigments alone are not readily dispersible in liquid vehicles. A variety of techniques have been developed which can provide stable pigment dispersions which can be used in inkjet printing. For example, dispersants can be added to the pigment to improve its dispersibility in a particular medium. Examples of dispersants include water-soluble polymers and surfactants. Typically, these polymeric dispersants have a molecular weight less than 20,000 in order to maintain solubility and therefore pigment stability.

Modified pigments have also been developed which provide ink compositions with improved properties, such as dispersibility, without the need for an external dispersant. For example, U.S. Patent No. 5,851,280 discloses methods for the attachment of organic groups onto pigments including, for example, attachment via a diazonium reaction wherein the organic group is part of the diazonium salt. The resulting surface-modified pigments can be used in a variety of applications, such as inks, inkjet inks, coatings, toners, plastics, rubbers, and the like. These modified pigments provide inkjet inks with good overall properties.

Polymers other than dispersants have also been incorporated into inkjet ink compositions in an effort to improve performance. For example, emulsion polymers or latexes have been used as an additive to improve the print performance of inkjet inks. Since an emulsion polymer typically has a high molecular weight, this enables the use of higher molecular weight materials in an inkjet ink application. However, as emulsion polymers, these polymers are not soluble and would tend to lead to difficulties in printing, particularly nozzle clogging.

Other polymer-based inks are also known. For example, U.S. Patent No. 6,281,267 describes an inkjet ink set comprising a first ink comprising a pH-sensitive polymer and a self-dispersing pigment and a second ink. When the first ink comes in contact with the second ink on a print medium, the polymer becomes insoluble and precipitates onto the print medium. This ink set is believed to have improved bleed and halo control.

Comb-branched copolymers have also been described for use in the preparation of pigment dispersions. For example, U.S. Patent No. 6,582,510 describes pigment dispersions comprising a pigment, a carrier, and an acrylic/polyether comb-branched copolymer dispersant, wherein the polyether portion of the copolymer is free of any acidic groups. Conventional pigments were used, and the resulting dispersion were found to be useful in inks and coatings.

As the inkjet printing industry moves towards print performance similar to that of laser printing, there remains a need for additional inkjet ink compositions and systems with improved print properties, such as improved print durability.

### SUMMARY OF THE INVENTION

The present invention relates to an aqueous inkjet ink composition comprising a) an aqueous vehicle, b) a modified pigment comprising a pigment having attached at least one organic group, and c) at least one comb-branched copolymer dispersant. The organic group comprises at least one ionic group, at least one ionizable group, or a mixture thereof. The comb-branched copolymer comprises at least one acrylic polymer segment and at least one polyalkylene oxide segment, such as an acrylic/polyether comb-branched copolymer having an acrylic polymer backbone with at least one polyalkylene oxide sidechain.

The present invention further relates to the use of the above described aqueous inkjet ink compositions to produce images with improved gloss when printed onto glossy media. In certain preferred embodiments, the aqueous inkjet ink compositions described herein may also be used to produce images having improved optical density when printed onto non-glossy media. Improved performance on glossy media is attained without sacrificing or degrading performance on non-glossy media. Thus, the present invention further relates to a method to improve at least one print property, such as gloss, of an image printed on a substrate comprising the steps of: i) preparing an aqueous inkjet ink composition described herein and ii) generating an image by printing the aqueous inkjet ink composition onto a glossy substrate. Preferably, this method is also a method to improve the optical density of a printed image comprising the steps of: i) preparing an aqueous inkjet ink composition described herein and ii) generating an image by printing the aqueous inkjet ink composition onto a non-glossy substrate.

The present invention further relates to a method of printing an image onto a substrate comprising the steps of: i) preparing an aqueous inkjet ink composition described above and ii) generating an image by printing the aqueous inkjet ink composition onto a glossy substrate. Preferably, when the substrate is a glossy substrate, the image has an average gloss value greater than an image produced by printing an aqueous inkjet ink composition which does not comprise a comb-branched copolymer dispersant onto the glossy substrate, and, more preferably, when the substrate is a non-glossy substrate, the image has an optical density value greater than or equal to an image produced by printing an aqueous inkjet ink composition which does not comprise a comb-branched copolymer dispersant onto the non-glossy substrate.

The present invention further relates to a consumable aqueous ink set comprising an aqueous inkjet ink composition and a substrate, wherein the aqueous inkjet ink composition is as described above. Preferably, when the substrate is a glossy substrate, an image produced by printing the aqueous inkjet ink composition onto the glossy substrate has an average gloss value greater than an image produced by printing an aqueous inkjet ink composition which does not comprise a comb-branched copolymer dispersant onto the glossy substrate. More preferably, when the substrate is a non-glossy substrate, an image produced by printing the aqueous inkjet ink composition onto the non-glossy substrate has an optical density value greater than or equal to an image produced by printing an aqueous inkjet ink composition which does not comprise a comb-branched copolymer dispersant onto the non-glossy substrate.

It is to be understood that both the foregoing general description and the following detailed description are exemplary and explanatory only and are intended to provide further explanation of the present invention, as claimed.

### DETAILED DESCRIPTION OF THE INVENTION

The present invention relates to aqueous inkjet ink compositions and the uses thereof.

The aqueous inkjet ink composition of the present invention comprises an aqueous vehicle and a modified pigment. The aqueous vehicle is a vehicle that contains greater than 50 % water. For example, the aqueous vehicle can be water or mixtures of water with water miscible solvents such as alcohols.

The modified pigment of the aqueous inkjet ink composition of the present invention comprises a pigment having attached at least one organic group. The pigment can be any type of pigment conventionally used by those skilled in the art, such as black pigments and other colored pigments including blue, black, brown, cyan, green, white, violet, magenta, red, orange, or yellow pigments. Mixtures of different pigments can also be used. Representative examples of black pigments include various carbon blacks (Pigment Black 7) such as channel blacks, furnace blacks and lamp blacks, and include, for example, carbon blacks sold under the Regal^{®}, Black Pearls^{®}, Elftex^{®}, Monarch^{®}, Mogul^{®}, and Vulcan^{®} trademarks available from Cabot Corporation (such as Black Pearls^{®} 2000, Black Pearls^{®} 1400, Black Pearls^{®} 1300, Black Pearls^{®} 1100, Black Pearls^{®} 1000, Black Pearls^{®} 900, Black Pearls^{®} 880, Black Pearls^{®} 800, Black Pearls^{®} 700, Black Pearls^{®} L, Elftex^{®} 8, Monarch^{®} 1400, Monarch^{®} 1300, Monarch^{®} 1100, Monarch^{®} 1000, Monarch^{®} 900, Monarch^{®} 880, Monarch^{®} 800, Monarch^{®} 700, Mogul^{®} L, Regal^{®} 330, Regal^{®} 400, Vulcan^{®} P). Suitable classes of colored pigments include, for example, anthraquinones, phthalocyanine blues, phthalocyanine greens, diazos, monoazos, pyranthrones, perylenes, heterocyclic yellows, quinacridones, and (thio)indigoids. Such pigments are commercially available in either powder or press cake form from a number of sources including, BASF Corporation, Engelhard Corporation and Sun Chemical Corporation. Examples of other suitable colored pigments are described in the Colour Index, 3rd edition (The Society of Dyers and Colourists, 1982). Preferably the pigment is a cyan, magenta, yellow, or black pigment, such as carbon black.

The pigment can have a wide range of BET surface areas, as measured by nitrogen adsorption, depending on the desired properties of the pigment. As known to those skilled in the art, a higher the surface area will correspond to smaller particle size. If a higher surface area is not readily available for the desired application, it is also well recognized by those skilled in the art that the pigment may be subjected to conventional size reduction or comminution techniques, such as ball or jet milling, to reduce the pigment to a smaller particle size, if desired.

The organic group of the modified pigment comprises at least one ionic group, ionizable group, or a mixture of an ionic group and an ionizable group. An ionic group is either anionic or cationic and is associated with a counterion of the opposite charge including inorganic or organic counterions such as Na⁺, K⁺, Li⁺, NH₄⁺, NR'₄⁺, acetate, NO₃⁻, SO₄⁻², R'SO₃⁻, R'OSO₃⁻, OH⁻, and Cl⁻, where R' represents hydrogen or an organic group such as a substituted or unsubstituted aryl and/or alkyl group. An ionizable group is one that is capable of forming an ionic group in the medium of use. Anionizable groups form anions and cationizable groups form cations. Organic ionic groups include those described in U.S. Patent No. 5,698,016, the description of which is fully incorporated herein by reference.

Anionic groups are negatively charged ionic groups that may be generated from groups having ionizable substituents that can form anions (anionizable groups), such as acidic substituents. They may also be the anion in the salts of ionizable substituents. Representative examples of anionic groups include -COO⁻, -SO₃⁻, -OSO₃⁻, -HPO₃⁻, -OPO₃⁻², and -PO₃⁻². Representative examples of anionizable groups include -COOH, -SO₃H, -PO₃H₂, -R'SH, -R'OH, and -SO₂NHCOR', where R' represents hydrogen or an organic group such as a substituted or unsubstituted aryl and/or alkyl group. Preferably, the organic group comprises a carboxylic acid group, a sulfonic acid group, a sulfate group, or salts thereof.

Cationic groups are positively charged organic ionic groups that may be generated from ionizable substituents that can form cations (cationizable groups), such as protonated amines. For example, alkyl or aryl amines may be protonated in acidic media to form ammonium groups -NR'₂H⁺, where R' represent an organic group such as a substituted or unsubstituted aryl and/or alkyl group. Cationic groups may also be positively charged organic ionic groups. Examples include quaternary ammonium groups (-NR'₃⁺) and quaternary phosphonium groups (-PR'₃⁺). Here, R' represents hydrogen or an organic group such as a substituted or unsubstituted aryl and/or alkyl group. Preferably, the organic group comprises an alkyl amine group or a salt thereof or an alkyl ammonium group.

The organic group may also be a polymeric group. Preferably, the polymeric group comprises the ionic or ionizable groups described above. Thus, the organic group may be a polymeric group comprising one or more anionic or anionizable groups. Examples include, but are not limited to, polyacids such as polyacrylic acid, polymethacrylic acid, copolymers of acrylic acid or methacrylic acid, including styrene-acrylic acid polymers, and hydrolyzed derivatives of maleic anhydride-containing polymers. The organic group may also be a polymeric group comprising one or more cationic or cationizable groups. Examples include, but are not limited to, linear or branched polyamines such as polyethyleneimine (PEI), oligomers of ethyleneimine (such as pentaethyleneamine, PEA) and derivatives of polyethyleneimine.

The aqueous inkjet ink composition of the present invention also comprises at least one comb-branched copolymer dispersant. A comb-branched copolymer is known in the art as a polymer having two different polymeric segments - a polymeric backbone and multiple polymeric sidechains. The comb-branched copolymer dispersant used in the inkjet ink composition of the present invention is a specific class of copolymers having at least one acrylic polymer segment and at least one polyalkylene oxide segment. Preferably, the acrylic polymer segment is the backbone of the comb-branched copolymer dispersant and the polyalkylene oxide segments are the side chains and include copolymers described in U.S. Patent Nos. 6,582,510, 6,214,958, 6,034,208, 5,614,017, 5,670,578, 5,985,989, and 5,834,576. Of the preferred acrylic-polyalkylene oxide comb-branched copolymers, most preferred are those in which the acrylic polymer segment is a homo- or copolymer of acrylic acid or salts thereof and therefore may comprise acrylic acid and/or acrylic acid salt monomer units. In addition, the polyalkylene oxide segment comprises units of ethylene oxide, propylene oxide, or both. Examples of preferred comb-branched copolymer dispersants include the Ethacryl™ dispersants commercially available from Lyondell Chemical Company.

The comb-branched copolymer has a molecular weight suitable for the material to function as a dispersant. Typically, the molecular weight is greater than about 500 and less than about 500,000. Preferred are copolymers having a molecular weight from about 1,000 to 100,000, more preferably from about 5,000 to about 80,000, and most preferably from about 10,000 to about 50,000.

The molecular weight of each of the polymeric segments of the comb-branched copolymer dispersant may vary within the overall copolymer molecular weight. For example, the molecular weight of the acrylic polymer segment may be between 30,000. and 150,000 (such as 38,000 to 127,000) and the molecular weight of the polyalkylene oxide segment may be less than 5,000 (such as 2,000 to 3,000).

As stated previously, the aqueous inkjet ink compositions of the present invention comprises an aqueous vehicle, a modified pigment, and a comb-branched copolymer dispersant. Each of these is present in an amount effective to provide desirable image quality (for example, optical density) without detrimentally affecting the performance of the inkjet ink. For example, typically, the modified pigment will be present in an amount ranging from about 0.1 % to about 20 % based on the weight of the inkjet ink composition. The amount of the comb-branched copolymer dispersant can vary depending on such factors as molecular weight and polymer composition.

Typically, dispersants are used in an inkjet ink composition at levels from about 0.5 to about 15 parts relative to 100 parts pigment. Levels outside of this range typically produce inkjet inks with poor dispersion properties, such as large pigment particle sizes. While the comb-branched copolymer may also be used at these conventional levels, it has further been found that levels greater than about 15 parts of the comb-branched copolymer dispersant can also be used without detrimentally effecting the dispersibility of the modified pigment. For example, the particle size of the modified pigment in the inkjet ink composition using this high level of copolymer dispersant is generally about 200 nm or less.

The aqueous inkjet ink compositions of the present invention can be formed with a minimum of additional components (additives and/or cosolvents) and processing steps. However, suitable additives may also be incorporated into these inkjet ink compositions to impart a number of desired properties while maintaining the stability of the compositions. For example, surfactants may be added to further enhance the colloidal stability of the composition. Other additives are well known in the art and include humectants, biocides, binders, drying accelerators, penetrants, and the like. The amount of a particular additive will vary depending on a variety of factors but are generally present in an amount ranging between 0 % and 40 % based on the weight of the inkjet ink composition. Additionally, the inkjet ink compositions of the present invention may further incorporate dyes to modify color balance and adjust optical density. Such dyes include food dyes, FD&C dyes, acid dyes, direct dyes, reactive dyes, derivatives of phthalocyanine sulfonic acids, including copper phthalocyanine derivatives, sodium salts, ammonium salts, potassium salts, lithium salts, and the like. It is also within the bounds of the present invention to use a mixture of the modified pigments described herein and unmodified pigments, other modified pigments, or both.

The inkjet ink compositions can be purified and/or classified using methods such as those described above for the modified pigments and dispersions thereof. An optional counterion exchange step can also be used. In this way, unwanted impurities or undesirable large particles can be removed to produce an ink with good overall properties.

The aqueous inkjet ink compositions of the present invention can be used to produce printed images on various substrates which have improved overall properties. While it is known, in general, to use dispersants in combination with modified pigments comprising pigments having attached organic groups, the inkjet ink compositions of the present invention, which comprise a specific class of comb-branched copolymers having at least one acrylic polymer segment and at least one polyalkylene oxide segment, provide unexpected improvements in a variety of different print attributes. For example, it has surprisingly been found that the aqueous inkjet ink compositions described above can be used to produce images which have improved gloss when printed on a glossy substrate in comparison to images produced using inkjet ink compositions which do not comprise the comb-branch copolymer or comprise alternative dispersants. The glossy substrate may be any known in the art, including, for example, any ink receptive polymer coated substrate such as a transparency or a polymer-coated paper substrate. Furthermore, equivalent or improved optical density has also been seen for images printed on porous substrates such as plain paper. This balance of performance in gloss on glossy media as well as optical density on non-glossy or porous media, such as plain paper, represents a significant advantage over currently available inkjet inks.

Thus, the present invention further relates to a method to improve at least one print property of an image printed on a substrate comprising the steps of preparing an aqueous inkjet ink composition described above and generating an image by printing this inkjet ink composition on a specified substrate. In one embodiment, the method is a method to improve the gloss of an image printed onto a glossy substrate. As used herein, the term "gloss" refers to the objective measurement of the amount of specular reflection from the surface of a printed image and is generally measured at 20 degrees from the normal axis and integrated over plus or minus 0.9 degrees. Preferably, while this method improves the gloss of the printed image, the haze of the image does not substantially change. The term "haze" refers to the amount of scattered light adjacent to the specular angle such as, for example, in a band 0.9 degrees wide just outside the region where gloss is measured. Typically, methods for improving gloss also produce an image with substantially higher haze - that is, both the haze and the gloss of an image generated on a glossy substrate are increased. For the method of the present invention, gloss is improved while haze remains essentially unchanged. Most preferably, the method to improve gloss is also a method to improve the optical density of an image printed onto a porous or non-glossy substrate, such as plain paper. Thus, an image produced on a glossy medium using the method described herein has been found to also have equivalent or improved optical density when printed onto a non-glossy substrate. Improvements in other print properties may also be found by one of ordinary skill in the art using the methods of the present invention.

The present invention further relates to a method of printing an image onto a substrate comprising the steps of: i) preparing an aqueous inkjet ink composition described above and ii) generating an image by printing the aqueous inkjet ink composition onto a glossy substrate. Examples of glossy substrates include those described above. Preferably, when the substrate is a glossy substrate, the image has an average gloss value greater than an image produced by printing an aqueous inkjet ink composition which does not comprise a comb-branched copolymer dispersant onto the glossy substrate. Thus, in one embodiment, the method of the present invention is a method of producing an image with high gloss.

More preferably, and in addition, when the substrate is a non-glossy substrate, the image has an optical density value greater than or equal to an image produced by printing an aqueous inkjet ink composition which does not comprise a comb-branched copolymer dispersant onto the non-glossy substrate. Examples of non-glossy substrates include those described above. Thus, images produced using the method of the present invention most preferably have high gloss when printed onto a glossy substrate and also have high optical density when printed on a non-glossy substrate. This balance of properties is difficult to achieve for inkjet printing inks.

The present invention further relates to a consumable aqueous ink set comprising an aqueous inkjet ink composition and a substrate, wherein the aqueous inkjet ink composition is as described above. Preferably, when the substrate is a glossy substrate, an image produced by printing the aqueous inkjet ink composition onto the glossy substrate has an average gloss value greater than an image produced by printing an aqueous inkjet ink composition which does not comprise a comb-branched copolymer dispersant onto the glossy substrate. More preferably, and in addition, when the substrate is a non-glossy substrate, an image produced by printing the aqueous inkjet ink composition onto the non-glossy substrate has an optical density value greater than or equal to an image produced by printing an aqueous inkjet ink composition which does not comprise a comb-branched copolymer dispersant onto the non-glossy substrate. Again, this balance of print performance features is difficult to achieve for inkjet ink printed images.

The present invention will be further clarified by the following examples which are intended to be only exemplary in nature.

### EXAMPLES

### Preparation of Inkjet Ink Compositions

Examples 1-8 describe the preparation of aqueous inkjet ink compositions of the present invention comprising a modified pigment and a comb-branched copolymer dispersant. Comparative Examples 1-2 describe the preparation of comparative aqueous inkjet ink compositions comprising a modified pigment and no comb-branched copolymer dispersant.

### Examples 1A-I

Nine aqueous inkjet ink compositions were prepared using the following general procedure.

A pigment premix was prepared in a 125 mL plastic Nalgene bottle by combining 33 g of a Cab-O-Jet^{®} colored pigment dispersion (a 10.0 wt% aqueous dispersion of a modified pigment comprising a pigment having attached sulfonic acid groups commercially available from Cabot Corporation) with a 40 wt% aqueous solution of Ethacryl™ P20, with agitation. Ethacryl™ P20 is a comb-branched copolymer dispersant having an acrylic acid-containing polymeric backbone and poly(ethylene oxide-propylene oxide) sidechains available from Lyondell Chemical Company. The molecular weight of the dispersant is 90,000, the molecular weight of the polyalkylene oxide sidechain is 3,000, the ethylene oxide/propylene oxide ratio is 66.8/28.7, and the acid content is 4.6% by weight. For each example, the specific components and amounts used to prepare each pigment premix are shown in Table 1 below.

**Table 1 - Pigment Premixes**

| | Colored Pigment Dispersion | | Comb-branched copolymer dispersant | |
|---|---|---|---|---|
| | Cab-O-Jet^{®} 250C (cyan) | | | |
| Ex # | grams | parts | grams | parts |
| 1A | 33.3 | 100 | 0.42 | 5 |
| 1B | 33.3 | 100 | 0.83 | 10 |
| 1C | 33.3 | 100 | 1.67 | 20 |

| | Cab-O-Jet^{®} 260M (magenta) | | | |
|---|---|---|---|---|
| Ex # | grams | parts | grams | parts |
| 1D | 33.3 | 100 | 0.42 | 5 |
| 1E | 33.3 | 100 | 0.83 | 10 |
| 1F | 33.3 | 100 | 1.67 | 20 |

| | Cab-O-Jet^{®} 270Y (yellow) | | | |
|---|---|---|---|---|
| Ex # | grams | parts | grams | parts |
| 1G | 33.3 | 100 | 0.42 | 5 |
| 1H | 33.3 | 100 | 0.83 | 10 |
| 1I | 33.3 | 100 | 1.67 | 20 |

The resulting mixture was then sonicated for 2 minutes using a Misomix sonicator with a 0.5 inch diameter tip and a power setting of 7.

A vehicle premix was prepared by combining the components shown in Table 2 below.

**Table 2 - Vehicle Premix**

| **Component** | **Wt% in vehicle** |
|---|---|
| Trimethylolpropane (TMP) | 6.28 |
| Glycerol | 6.28 |
| Diethylene glycol (DEG) | 6.28 |
| Acetylenol EH | 0.2 |
| Water | 81 |

Aqueous inkjet ink compositions of the present invention were prepared by adding water, vehicle premix, and pigment premix (in that order) to a glass vial, agitating by hand, and filtering through a 1 micron GMF150 Puradisc filter (available from Whatman Corporation). The amounts of each component, as well as the resulting pigment concentrations, are shown in Table 3 below.

**Table 3 - Aqueous Inkjet Ink Compositions**

| Ex. # | Water | Vehicle Premix | Pigment Premix | Wt% Pigment |
|---|---|---|---|---|
| 1A | 5.44 g | 3.87 g | 5.68 g | 3.87 |
| 1B | 5.37 g | 3.87 g | 5.75 g | 3.87 |
| 1C | 5.24 g | 3.87 g | 5.89 g | 3.87 |
| 1D | 0.8 g | 3.87 g | 10.33 g | 6.85 |
| 1E | 0.67 g | 3.87 g | 10.46 g | 6.85 |
| 1F | 0.42 g | 3.87 g | 10.71 g | 6.85 |
| 1G | 6.82 g | 3.87 g | 4.32 g | 2.87 |
| 1H | 6.76 g | 3.87 g | 4.37 g | 2.87 |
| 1I | 6.66 g | 3.87 g | 4.47 g | 2.87 |

### Examples 2A-C

Three aqueous inkjet ink compositions were prepared using the procedure described in Example 1, with the exception that 30 parts of Ethacryl™ P2013 was used in place of Ethacryl™ P20. This is a comb-branched copolymer dispersant having an acrylic acid-containing polymeric backbone and poly(ethylene oxide-propylene oxide) sidechains available from Lyondell Chemical Company that is similar to Ethacryl™ P20 but having a higher molecular weight (130,000).

The specific components and amounts used to prepare each pigment premix are shown in Table 4 below.

**Table 4 - Pigment Premixes**

| | Colored Pigment Dispersion | | Comb-branched copolymer dispersant | |
|---|---|---|---|---|
| | Cab-O-Jet^{®} 250C (cyan) | | | |
| Ex # | grams | parts | grams | parts |
| 2A | 33.3 | 100 | 2.50 | 30 |

| | Cab-O-Jet^{®} 260M (magenta) | | | |
|---|---|---|---|---|
| Ex # | grams | parts | grams | parts |
| 2B | 33.3 | 100 | 2.50 | 30 |

| | Cab-O-Jet^{®} 270Y (yellow) | | | |
|---|---|---|---|---|
| Ex # | grams | parts | grams | parts |
| 2C | 33.3 | 100 | 2.50 | 30 |

The amounts of water, vehicle premix (which was the same as in Example 1), and pigment premix used are shown in Table 5 below. The resulting pigment concentrations are also included.

**Table 5 - Aqueous Inkjet Ink Compositions**

| Ex. # | Water | Vehicle Premix | Pigment Premix | Wt% Pigment |
|---|---|---|---|---|
| 2A | 5.10 g | 3.87 g | 6.03 g | 3.87 |
| 2B | 0.17 g | 3.87 g | 10.96 g | 6.85 |
| 2C | 6.55 g | 3.87 g | 4.58 g | 2.87 |

### Examples 3A-C

Three aqueous inkjet ink compositions were prepared using the procedure described in Example 2, with the exception that 20 parts of Joncryl 586 (water soluble styrene acrylic copolymer having a molecular weight, Mw, of 4,600 and an acid number of 108, available from Johnson Polymer, Inc.) was added to the pigment premix. A 10% aqueous solution of Joncryl 586 was prepared and used. The specific components and amounts used to prepare each pigment premix are shown in Table 6 below.

**Table 6 - Pigment Premixes**

| | Colored Pigment Dispersion | | Comb-branched copolymer dispersant | | Styrene acrylic copolymer | |
|---|---|---|---|---|---|---|
| | Cab-O-Jet^{®} 250C (cyan) | | | | | |
| Ex # | grams | parts | grams | parts | grams | parts |
| 3A | 33.3 | 100 | 2.5 | 30 | 6.67 | 20 |

| | Cab-O-Jet^{®} 260M (magenta) | | | | | |
|---|---|---|---|---|---|---|
| Ex # | grams | parts | grams | parts | grams | parts |
| 3B | 33.3 | 100 | 2.5 | 30 | 6.67 | 20 |

| | Cab-O-Jet^{®} 270Y (yellow) | | | | | |
|---|---|---|---|---|---|---|
| Ex # | grams | parts | grams | parts | grams | parts |
| 3C | 33.3 | 100 | 2.5 | 30 | 6.67 | 20 |

The amounts of water, vehicle premix (which was the same as in Example 1), and pigment premix used are shown in Table 7 below. The resulting pigment concentrations are also included.

**Table 7 - Aqueous Inkjet Ink Compositions**

| Ex. # | Water | Vehicle Premix | Pigment Premix | Wt% Pigment |
|---|---|---|---|---|
| 3A | 3.42 g | 3.87 g | 7.7 g | 3.87 |
| 3B | 0g | 3.87 g | 11.22 g | 5.00 |
| 3C | 5.27 g | 3.87 g | 5.85 g | 2.87 |

### Examples 4A-C

Three aqueous inkjet ink compositions were prepared using the procedure described in Example 2, with the exception that 20 parts of Joncryl 683 (water soluble styrene acrylic copolymer having a molecular weight, Mw, of 8,000 and an acid number of 165, available from Johnson Polymer, Inc.) was added to the pigment premix. A 10% aqueous solution of Joncryl 683 was prepared and used. The specific components and amounts used to prepare each pigment premix are shown in Table 8 below.

**Table 8 - Pigment Premixes**

| | Colored Pigment Dispersion | | Comb-branched copolymer dispersant | | Styrene acrylic copolymer | |
|---|---|---|---|---|---|---|
| | Cab-O-Jet^{®} 250C (cyan) | | | | | |
| Ex # | grams | parts | grams | parts | grams | parts |
| 4A | 33.3 | 100 | 2.5 | 30 | 6.67 | 20 |

| | Cab-O-Jet^{®} 260M (magenta) | | | | | |
|---|---|---|---|---|---|---|
| Ex # | grams | parts | grams | parts | grams | parts |
| 4B | 33.3 | 100 | 2.5 | 30 | 6.67 | 20 |

| | Cab-O-Jet^{®} 270Y (yellow) | | | | | |
|---|---|---|---|---|---|---|
| Ex # | grams | parts | grams | parts | grams | parts |
| 4C | 33.3 | 100 | 2.5 | 30 | 6.67 | 20 |

The amounts of water, vehicle premix (which was the same as in Example 1), and pigment premix used are shown in Table 9 below. The resulting pigment concentrations are also included.

**Table 9 - Aqueous Inkjet Ink Compositions**

| Ex. # | Water | Vehicle Premix | Pigment Premix | Wt% Pigment |
|---|---|---|---|---|
| 4A | 3.42 g | 3.87 g | 7.7 g | 3.87 |
| 4B | 0 g | 3.87 g | 11.22 g | 5.00 |
| 4C | 5.27 g | 3.87 g | 5.85 g | 2.87 |

### Examples 5A-C

Three aqueous inkjet ink compositions were prepared using the procedure described in Example 2, with the exception that 20 parts of Joncryl 678 (water soluble styrene acrylic copolymer having a molecular weight, Mw, of 8,500 and an acid number of 215, available from Johnson Polymer Inc.) was added to the pigment premix. A 10% aqueous solution of Joncryl 678 was prepared and used. The specific components and amounts used to prepare each pigment premix are shown in Table 10 below.

**Table 10 - Pigment Premixes**

| | Colored Pigment Dispersion | | Comb-branched copolymer dispersant | | Styrene acrylic copolymer | |
|---|---|---|---|---|---|---|
| | Cab-O-Jet^{®} 250C (cyan) | | | | | |
| Ex # | grams | parts | grams | parts | grams | parts |
| 5A | 33.3 | 100 | 2.5 | 30 | 6.67 | 20 |

| | Cab-O-Jet^{®} 250M (magenta) | | | | | |
|---|---|---|---|---|---|---|
| Ex # | grams | parts | grams | parts | grams | parts |
| 5B | 33.3 | 100 | 2.5 | 30 | 6.67 | 20 |

| | Cab-O-Jet^{®} 270Y (yellow) | | | | | |
|---|---|---|---|---|---|---|
| Ex # | grams | parts | grams | parts | grams | parts |
| 5C | 33.3 | 100 | 2.5 | 30 | 6.67 | 20 |

The amounts of water, vehicle premix (which was the same as in Example 1), and pigment premix used are shown in Table 11 below. The resulting pigment concentrations are also included.

**Table 11 - Aqueous Inkjet Ink Compositions**

| Ex. # | Water | Vehicle Premix | Pigment Premix | Wt% Pigment |
|---|---|---|---|---|
| 5A | 3.42 g | 3.87 g | 7.7 g | 3.87 |
| 5B | 0 g | 3.87 g | 11.22 g | 5.00 |
| 5C | 5.27 g | 3.87 g | 5.85 g | 2.87 |

### Examples 6A-C

Three aqueous inkjet ink compositions were prepared using the procedure described in Example 2, with the exception that 20 parts of Joncryl 685 (water soluble styrene acrylic copolymer available having a molecular weight 8,500 and an acid number of 270 from Johnson Polymer Inc.) was added to the pigment premix. A 10% aqueous solution of Joncryl 685 was prepared and used. The specific components and amounts used to prepare each pigment premix are shown in Table 12 below.

**Table 12 - Pigment Premixes**

| | Colored Pigment Dispersion | | Comb-branched copolymer dispersant | | Styrene acrylic copolymer | |
|---|---|---|---|---|---|---|
| | Cab-O-Jet^{®} 250C (cyan) | | | | | |
| Ex # | grams | parts | grams | parts | grams | parts |
| 6A | 33.3 | 100 | 2.5 | 30 | 6.67 | 20 |

| | Cab-O-Jet^{®} 260M (magenta) | | | | | |
|---|---|---|---|---|---|---|
| Ex # | grams | parts | grams | parts | grams | parts |
| 6B | 33.3 | 100 | 2.5 | 30 | 6.67 | 20 |

| | Cab-O-Jet^{®} 270Y (yellow) | | | | | |
|---|---|---|---|---|---|---|
| Ex # | grams | parts | grams | parts | grams | parts |
| 6C | 33.3 | 100 | 2.5 | 30 | 6.67 | 20 |

The amounts of water, vehicle premix (which was the same as in Example 1), and pigment premix used are shown in Table 13 below. The resulting pigment concentrations are also included.

**Table 13 - Aqueous Inkjet Ink Compositions**

| Ex. # | Water | Vehicle Premix | Pigment Premix | Wt% Pigment |
|---|---|---|---|---|
| 6A | 3.42 g | 3.87 g | 7.7 g | 3.87 |
| 6B | 0 g | 3.87 g | 11.22 g | 5.00 |
| 6C | 5.27 g | 3.87 g | 5.85 g | 2.87 |

### Examples 7A-C

Three aqueous inkjet ink compositions were prepared using the procedure described in Example 4, with the exception that a different vehicle premix was used. Thus, a vehicle premix was prepared by combining the components shown in Table 14 below.

**Table 14 - Vehicle Premix**

| **Component** | **Amount (g)** |
|---|---|
| Trimethylolpropane (TMP) | 13.1 |
| 2-Pyrrolidone | 18.3 |
| 1,5 Pentanediol | 18.3 |
| Surfynol 465 | 0.524 |
| Water | 20.0 |

The specific components and amounts used to prepare each pigment premix are shown in Table 15 below.

**Table 15 - Pigment Premixes**

| | Colored Pigment Dispersion | | Comb-branched copolymer dispersant | | Styrene acrylic copolymer | |
|---|---|---|---|---|---|---|
| | Cab-O-Jet^{®} 250C (cyan) | | | | | |
| Ex # | grams | parts | grams | parts | grams | parts |
| 7A | 33.3 | 100 | 2.5 | 30 | 6.67 | 20 |

| | Cab-O-Jet^{®} 260M (magenta) | | | | | |
|---|---|---|---|---|---|---|
| Ex # | grams | parts | grams | parts | grams | parts |
| 7B | 33.3 | 100 | 2.5 | 30 | 6.67 | 20 |

| | Cab-O-Jet^{®} 270Y (yellow) | | | | | |
|---|---|---|---|---|---|---|
| Ex # | grams | parts | grams | parts | grams | parts |
| 7C | 33.3 | 100 | 2.5 | 30 | 6.67 | 20 |

The amounts of water, vehicle premix, and pigment premix used are shown in Table 16 below. The resulting pigment concentrations are also included.

**Table 16 - Aqueous Inkjet Ink Compositions**

| Ex. # | Water | Vehicle Premix | Pigment Premix | Wt% Pigment |
|---|---|---|---|---|
| 7A | 3.84 | 4.03 g | 7.13 | 3.87 |
| 7B | 1.3 | 4.03 g | 9.68 | 5.00 |
| 7C | 5.52 | 4.03 g | 5.45 | 2.87 |

### Examples 8A-C

Three aqueous inkjet ink compositions were prepared using the procedure described in Example 4, with the exception that a different vehicle premix was used. Thus, a vehicle premix was prepared by combining the components shown in Table 17 below.

**Table 17 - Vehicle Premix**

| **Component** | **Amount (g)** |
|---|---|
| Triethyleneglycol monobutyl ether | 10.0 |
| Glycerol | 20.0 |
| Surfynol 465 | 2.0 |
| Water | 20.0 |

The specific components and amounts used to prepare each pigment premix are shown in Table 18 below.

**Table 18 - Pigment Premixes**

| | Colored Pigment Dispersion | | Comb-branched copolymer dispersant | | Styrene acrylic copolymer | |
|---|---|---|---|---|---|---|
| | Cab-O-Jet^{®} 250C (cyan) | | | | | |
| Ex # | grams | parts | grams | parts | grams | parts |
| 8A | 33.3 | 100 | 2.5 | 30 | 6.67 | 20 |

| | Cab-O-Jet^{®} 260M (magenta) | | | | | |
|---|---|---|---|---|---|---|
| Ex # | grams | parts | grams | parts | grams | parts |
| 8B | 33.3 | 100 | 2.5 | 30 | 6.67 | 20 |

| | Cab-O-Jet^{®} 270Y (yellow) | | | | | |
|---|---|---|---|---|---|---|
| Ex # | grams | parts | grams | parts | grams | parts |
| 8C | 33.3 | 100 | 2.5 | 30 | 6.67 | 20 |

The amounts of water, vehicle premix, and pigment premix used are shown in Table 19 below. The resulting pigment concentrations are also included.

**Table 19 - Aqueous Inkjet Ink Compositions**

| Ex. # | Water | Vehicle Premix | Pigment Premix | Wt% Pigment |
|---|---|---|---|---|
| 8A | 3.97 | 3.90 g | 7.13 | 3.87 |
| 8B | 1.42 | 3.90 g | 9.68 | 5.00 |
| 8C | 5.65 | 3.90 g | 5.45 | 2.87 |

### Comparative Examples 1A-C

Three aqueous inkjet ink compositions were prepared using the procedure described in Example 1, with the exception that no comb-branched copolymer dispersant was used. No dispersant was added, and thus no pigment premix was prepared. Instead, the colored pigment dispersions were used directly. The vehicle premix was the same as in Example 1.

Thus, comparative aqueous inkjet ink compositions were prepared by adding water, vehicle premix, and colored pigment dispersion (in that order) to a glass vial, agitating by hand, and filtering through a 1 micron GMF150 Puradisc filter (available from Whatman Corporation). The amounts of each component, as well as the resulting pigment concentrations, are shown in Table 20 below.

**Table 20 - Comparative Aqueous Inkjet Ink Compositions**

| Ex # | Water | Vehicle Premix | Colored Pigment Dispersion | | Wt % Pigment |
|---|---|---|---|---|---|
| Comp 1A | 4.76 g | 3.87 g | Cab-O-Jet^{®} 250C | 6.38 g | 3.87 |
| | | | (cyan) | | |
| Comp 1B | 2.89 g | 3.87 g | Cab-O-Jet^{®} 260M | 8.24 g | 6.85 |
| | | | (magenta) | | |
| Comp 1C | 6.40 g | 3.87 g | Cab-O-Jet^{®} 270Y | 4.73 g | 2.87 |
| | | | (yellow) | | |

### Comparative Examples 2A-F

Six aqueous inkjet ink compositions were prepared using the procedure described in Example 1, with the exception that various conventional dispersants were used instead of Ethacryl™ P20. None of these dispersants are comb-branched copolymer dispersants.

Thus, a pigment premix was prepared in a 125 mL plastic Nalgene bottle by adding 33 g of Cab-O-Jet^{®} 260M colored pigment dispersion (a 10.0 wt% aqueous dispersion of a modified pigment comprising a magenta pigment having attached sulfonic acid groups commercially available from Cabot Corporation) with a non-comb-branched copolymer dispersant and an amount of makeup water to bring the total pigment solids in each dispersion to 9.22%. For each example, the specific components and amounts used are shown in Table 21 below. The resulting mixture was then sonicated for 2 minutes using a Misomix sonicator with a 0.5 inch diameter tip and a power setting of 7.

**Table 21 - Pigment Premixes**

| | Colored Pigment Dispersion | | Dispersant * | | | Water |
|---|---|---|---|---|---|---|
| Ex # | grams | parts | type | grams | parts | grams |
| Comp 2A | 30.0 | 100 | Tego 740W | 0.891 | 30 | 2.079 |
| | | | (100% solids) | | | |
| Comp 2B | 30.0 | 100 | Tego 750W | 2.23 | 30 | 0.740 |
| | | | (40 % solids in water) | | | |
| Comp 2C | 30.0 | 100 | Tego 760W | 2.55 | 30 | 0.480 |
| | | | (35 % solids in water) | | | |
| Comp 2D | 30.0 | 100 | Dispers 651 | 2.97 | 30 | 0 |
| | | | (30 % solids in water) | | | |
| Comp 2E | 30.0 | 100 | Disperbyk 190 | 2.23 | 30 | 0.740 |
| | | | (40% solids in water) | | | |
| Comp 2F | 30.0 | 100 | Disperbyk 192 | 0.891 | 30 | 2.079 |
| | | | (100% solids) | | | |

| | | | | | | |
|---|---|---|---|---|---|---|
| * Tego and Dispers dispersants are available from Tego Chemie Service GmbH, a division of Degussa AG group, Germany. Disperbyk dispersants are available from BYK-Chemie, a division of Altana AG, Bad Homburg, Germany. | | | | | | |

Comparative aqueous inkjet ink compositions were prepared by adding water, vehicle premix, and pigment premix (in that order) to a glass vial, agitating by hand, and filtering through a 1 micron GMF150 Puradisc filter (available from Whatman Corporation). The amounts of each component, as well as the resulting pigment concentrations, are shown in Table 22 below.

**Table 22 - Comparative Aqueous Inkjet Ink Compositions**

| Ex. # | Water | Vehicle Premix | Pigment Premix | Wt% Pigment |
|---|---|---|---|---|
| Comp 2A | 3.0 | 3.87 g | 8.13 | 5.0 |
| Comp 2B | 3.0 | 3.87 g | 8.13 | 5.0 |
| Comp 2C | 3.0 | 3.87 g | 8.13 | 5.0 |
| Comp 2D | 3.0 | 3.87 g | 8.13 | 5.0 |
| Comp 2E | 3.0 | 3.87 g | 8.13 | 5.0 |
| Comp 2F | 3.0 | 3.87 g | 8.13 | 5.0 |

### Print Properties of Aqueous Inkjet Ink Compositions

Examples 9-12 compare the print performance of the aqueous inkjet ink compositions of the present invention and those of the comparative examples described above.

### Example 9

The aqueous inkjet ink compositions of Examples 1-3 (comprising a modified pigment and a comb-branched copolymer dispersant) and Comparative Example 1 (comprising a modified pigment without a comb-branched copolymer dispersant) were placed into a print cartridge designed for use in a Canon i550 inkjet printer and tested for print performance. For each example, cyan, magenta, and yellow samples having similar compositions were used together as an ink set. Table 23 below shows the ink sets and the corresponding inkjet ink compositions used.

**Table 23 - Ink Sets**

| ID | Cyan | Magenta | Yellow |
|---|---|---|---|
| Ink Set 1ADG | Ex. 1A | Ex. 1D | Ex. 1G |
| Ink Set 1BEH | Ex. 1B | Ex. 1E | Ex. 1H |
| Ink Set 1CFI | Ex. 1C | Ex. 1F | Ex. 1I |
| Ink Set 2 | Ex. 2A | Ex. 2B | Ex. 2C |
| Ink Set 3 | Ex. 3A | Ex. 3B | Ex. 3C |
| Ink Set 7 | Ex. 7A | Ex. 7B | Ex. 7C |
| Ink Set 8 | Ex. 8A | Ex. 8B | Ex. 8C |
| Comp Ink Set 1 | Comp 1A | Comp 1B | Comp 1C |

Images were printed using a Canon i550 inkjet printer. For print testing on glossy substrates, gloss test patterns consisting of 40 colored patches (6 solid colors of cyan, magenta, yellow, red, green, and blue along with 34 intermediate shades) were printed onto Canon PR-101 Photopaper and allowed to dry for 24 hours prior to testing. Gloss at 20 degrees and haze of these images was measured using a BYK-Gardner micro haze *plus* gloss meter. Results are shown in Table 24 and Table 25 below.

**Table 24 - Average Gloss and Haze**

| ID | Average Gloss | Average Haze |
|---|---|---|
| Ink Set 1ADG | 29.5% | 176 |
| Ink Set 1BEH | 35.6% | 180 |
| Ink Set 1CFI | 41.1% | 186 |
| Ink Set 2 | 36.0% | 272 |
| Ink Set 3 | 31.6% | 230 |
| Ink Set 7 | 38.0% | 273 |
| Ink Set 8 | 35.7% | 254 |
| Comp Ink Set 1 | 22.7% | 155 |

As the data in Table 24 shows, for Ink Sets 1ADG, 1BEH, and 1CFI, containing inkjet ink compositions having increasing levels of comb-branched copolymer dispersants, gloss at 20 degrees increases with increasing levels of comb-branched copolymer. For these Ink Sets, gloss of only the 6 solid colored patches were measured and averaged. Average gloss readings made by measuring only the 6 solid color patches are typically higher than those made by measuring all 40 patches since the lower gloss colors are not included. For Ink Sets 2, 3, 7, 8 and Comp Ink Set 1, gloss of all 40 patches were measured and averaged.

The data in Table 24 shows that the ink sets containing inkjet ink compositions of the present invention (which comprise a modified pigment and a comb-branched copolymer dispersant) produce images on a glossy substrate which have an average gloss value greater than an ink set containing comparative inkjet ink compositions (which comprise a modified pigment but no comb-branched copolymer dispersant). In addition, comparing Ink Sets 1ADG, 1BEH, and 1CFI with Comp Ink Set 1, the data also shows that average haze values were very similar and were therefore unaffected by the level of comb-branched copolymer added. Furthermore, while the haze value for Ink Set 2 is higher than that of Comp Ink Set 1, this increase would not be noticeable to the observer and therefore would not detract from the image's overall improved gloss. Finally, Ink Sets 7 and 8, which are produced using a different vehicle than those of the other ink sets of the present invention, show that improved gloss can be attained with a comb-branched copolymer dispersant in a variety of ink formulations. Thus, the data shows that inkjet ink compositions of the present invention can be used to produce images on a glossy substrate with good gloss performance.

Several of the ink sets shown above were also tested for durability by rubbing several of the color patches with a finger. Testing was conducted immediately after printing of the samples, as well as a 5 minutes and 24 hours after printing. If the images smear badly, then durability is considered to be poor. Likewise, if little to no smearing occurs, durability is considered to be excellent. Results are shown in Table 25 below.

**Table 25 - Durability**

| ID | Immediately | 5 minutes | 24 hours |
|---|---|---|---|
| Ink Set 2 | fair | good | good |
| Ink Set 3 | good | excellent | excellent |
| Comp Ink Set 1 | poor | poor | fair |

As the data shows, Ink Sets 2 and 3, containing inkjet ink compositions of the present invention (which comprise a modified pigment and a comb-branched copolymer dispersant) produce images on a glossy substrate which have better durability than an ink set containing comparative inkjet ink compositions (which comprise a modified pigment but no comb-branched copolymer dispersant). In particular, the durability of images produced with Ink Set 2 is as good immediately after printing as those produced with Comp Ink Set 1 after 24 hours. Furthermore, the use of a styrene-acrylic copolymer in Ink Set 3 further improves the image durability both immediately after printing as well as after 24 hours.

Thus, the inkjet ink compositions of the present invention comprising a modified pigment and a comb-branched copolymer dispersant, can be used to produce images with improved print properties on glossy substrates compared to comparative inkjet ink compositions comprising a modified pigment but no comb-branched copolymer dispersants.

### Example 10

Several of the aqueous inkjet ink compositions of Comparative Example 2 (comprising a modified pigment and various non-comb-branched copolymer dispersants) were placed into a print cartridge designed for use in a Canon i550 inkjet printer, and images were printed and tested for print performance. For print testing on glossy substrates, gloss test patterns consisting of magenta-colored patches varying in color density were printed onto Canon PR-101 Photopaper and allowed to dry for 24 hours prior to testing. Gloss at 20 degrees and haze of these images was measured using a BYK-Gardner micro haze *plus* gloss meter. Average values were obtained by measuring gloss and haze on 3 magenta patches - one of high density, medium density, and low density. Results are shown in Table 26 below.

**Table 26 - Average Gloss and Haze**

| ID | Dispersant | Average Gloss | Average Haze |
|---|---|---|---|
| Comp 2A | Tego 740W | 26.7% | 153 |
| Comp 2B | Tego 750W | 29.3% | 82 |
| Comp 2C | Tego 760W | 30.7% | 165 |
| Comp 2D | Dispers 651 | 25.5% | 144 |

The data in Table 26 can be compared with the data for Inkset 2 shown in Table 24, since both contain polymeric dispersants at the same level and in the same ink formulation. The data shows that Inkset 2 containing inkjet ink compositions of the present invention (which comprise a modified pigment and a comb-branched copolymer dispersant) produces images on a glossy substrate which have an average gloss value greater than ink sets containing compartive inkjet ink compositions (which comprise a modified pigment and non-comb-branched copolymer dispersants). Therefore, comb-branched copolymer dispersants provide images with overall better print performance than conventional dispersants in combination with modified pigments.

### Example 11

Optical density (OD) performance was determined for images produced using Inkset 4 on non-glossy substrates. As non-glossy substrates (plain paper printing) HP Bright White, Xerox 4024, Hammermill Copy Plus, and Great White 24H were used. The resulting images were also allowed to dry for 24 hours and optical density measurements were obtained. Results are shown in Table 27 below, which shows an average maximum optical density for each color across all 4 paper sets.

**Table 27 - Average Maximum OD on Plain Paper**

| ID | Cyan | Magenta | Yellow |
|---|---|---|---|
| Ink Set 2 | 0.93 | 0.87 | 1.00 |
| Comp Ink Set 1 | 0.89 | 0.86 | 0.92 |

As the data in Table 27 shows, the OD of an ink set containing inkjet ink compositions of the present invention have the same OD as an ink set containing comparative inkjet ink compositions. This is particularly notable since, as the data in Table 25 shows, the gloss of the images produced from Ink Set 2 is considerably higher than that of Comp Ink Set 1 on a glossy substrate. Typically, the incorporation of a dispersant, such as the comb-branched copolymer dispersant used in the inkjet ink compositions of the present invention, which is found to increase the gloss of an image printed on a glossy substrate would be expected to produce an image on plain paper with much lower optical density. Thus, the inkjet ink compositions of the present invention, which can be used to prepare images with improved properties on glossy substrates, can also be used to produce images with good performance on plain paper.

### Example 12

A "versatile" inkjet ink composition is one that has good print performance on a variety of media. In order to determine the versatility of the inkjet ink compositions of the present invention, images were produced on both glossy media and non-glossy media. The gloss of the images produced on the glossy media and the optical density of the images produced on non-glossy media were measured. Results were compared to images produced using commercially available inkjet ink compositions on the same media set.

Three ink sets were used. Example 12A is Ink Set 3, which is an inkjet ink composition of the present invention, Example, 12B is a Dupont Fusion™ ink set, and Example 12C is the pigment set from an Epson C-84 Durabrite™ Ink. For Examples 12A and 12B, the corresponding ink set was placed into a print cartridge designed for use in a Canon i550 inkjet printer. For Example 12C, the ink set was printed using an Epson C-84 printer. For all 3 sets, color images (cyan, yellow, and magenta) were printed on glossy media as well as on plain paper and allowed to dry for 24 hours. Printing was performed using two different printer settings - one for plain paper and one for glossy paper. Canon PR101 Photopaper was used as the glossy substrate while 4 different types of plain paper were used - Hammermill Copy Plus, HP Bright White, Great White 24H, and Xerox 4024

Optical density for each cyan, magenta, and yellow image printed on each substrate using both printer settings were measured. Results are shown in Tables 28, 29, and 30 below.

**Table 28 - Optical Density Measurements for Example 12A**

| Plain paper printer setting | | | |
|---|---|---|---|
| Paper | Cyan | Magenta | Yellow |
| Xerox 4024 | 0.97 | 0.95 | 1.01 |
| Hammermill Copy Plus | 1.03 | 1.10 | 1.15 |
| HP Bright White | 1.12 | 1.09 | 1.19 |
| Great White | 0.93 | 0.93 | 1.01 |
| Canon PR101 Photopaper | 1.92 | 1.50 | 1.61 |

| Glossy paper printer setting | | | |
|---|---|---|---|
| Paper | Cyan | Magenta | Yellow |
| Xerox 4024 | 0.97 | 0.99 | 1.01 |
| Hammermill Copy Plus | 1.07 | 1.06 | 1.15 |
| HP Bright White | 1.08 | 1.04 | 1.13 |
| Great White | 0.95 | 0.97 | 1.00 |
| Canon PR101 Photopaper | 1.91 | 1.40 | 1.58 |

**Table 29 - Optical Density Measurements for Example 12B**

| Plain paper printer setting | | | |
|---|---|---|---|
| Paper | Cyan | Magenta | Yellow |
| Xerox 4024 | 0.81 | 0.87 | 0.87 |
| Hammermill Copy Plus | 0.77 | 0.84 | 0.87 |
| HP Bright White | 0.97 | 1.04 | 1.04 |
| Great White | 0.82 | 0.86 | 0.83 |
| Canon PR101 Photopaper | 1.54 | 1.81 | 1.77 |

| Glossy paper printer setting | | | |
|---|---|---|---|
| Paper | Cyan | Magenta | Yellow |
| Xerox 4024 | 0.86 | 0.89 | 0.87 |
| Hammermill Copy Plus | 0.79 | 0.80 | 0.87 |
| HP Bright White | 0.97 | 1.02 | 1.02 |
| Great White | 0.82 | 0.88 | 0.86 |
| Canon PR101 Photopaper | 1.45 | 1.64 | 1.72 |

**Table 30 - Optical Density Measurements for Example 12C**

| Plain paper printer setting | | | |
|---|---|---|---|
| Paper | Cyan | Magenta | Yellow |
| Xerox 4024 | 1.03 | 1.08 | 1.12 |
| Hammermill Copy Plus | 1.04 | 1.13 | 1.23 |
| HP Bright White | 1.21 | 1.29 | 1.37 |
| Great White | 1.01 | 1.06 | 1.10 |
| Canon PR101 Photopaper | 1.73 | 1.69 | 1.59 |

| Glossy paper printer setting | | | |
|---|---|---|---|
| Paper | Cyan | Magenta | Yellow |
| Xerox 4024 | 1.07 | 1.17 | 1.20 |
| Hammermill Copy Plus | 1.06 | 1.27 | 1.28 |
| HP Bright White | 1.24 | 1.46 | 1.41 |
| Great White | 1.03 | 1.11 | 1.16 |
| Canon PR101 Photopaper | 1.99 | 2.07 | 2.06 |

Each of these ink sets differ in composition or formulation (percent pigment, vehicle, etc.), and therefore it is not possible to directly compare optical density performance between each set for images printed on plain paper. However, since glossy media is considered to be non-porous, it can be assumed that the optical density of an image printed on glossy media would be the maximum optical density achievable for that amount of ink printed. Thus, one can compare the optical density performance of an image printed on a plain paper substrate to that on a glossy substrate since the same amount of ink is printed for both. The ratio of OD on plain paper to that on glossy media can be viewed as an efficiency value - the closer the ratio is to 1, the closer the optical density on plain paper is to the maximum value.

In this case, since all of the ink sets were printed on the same set of substrates, the efficiency values can be compared. Therefore, an efficiency value was calculated from the data shown in Tables 28, 29, and 30. The results are shown in Table 31 below.

**Table 31**

| **Example 12A** | Plain paper setting | | | Glossy paper setting | | |
|---|---|---|---|---|---|---|
| Paper | Cyan | Magenta | Yellow | Cyan | Magenta | Yellow |
| Xerox 4024 | 0.51 | 0.63 | 0.63 | 0.51 | 0.71 | 0.64 |
| Hammermill Copy Plus | 0.54 | 0.73 | 0.71 | 0.56 | 0.76 | 0.73 |
| HP Bright White | 0.58 | 0.73 | 0.74 | 0.57 | 0.74 | 0.72 |
| Great White | 0.48 | 0.62 | 0.63 | 0.50 | 0.69 | 0.63 |
| **Average** | 0.53 | 0.68 | 0.68 | 0.53 | 0.73 | 0.68 |

| **Example 12B** | Plain paper setting | | | Glossy paper setting | | |
|---|---|---|---|---|---|---|
| Paper | Cyan | Magenta | Yellow | Cyan | Magenta | Yellow |
| Xerox 4024 | 0.53 | 0.48 | 0.49 | 0.59 | 0.54 | 0.51 |
| Hammermill Copy Plus | 0.50 | 0.46 | 0.49 | 0.54 | 0.49 | 0.51 |
| HP Bright White | 0.63 | 0.57 | 0.59 | 0.67 | 0.62 | 0.59 |
| Great White | 0.53 | 0.48 | 0.47 | 0.57 | 0.54 | 0.50 |
| **Average** | 0.55 | 0.50 | 0.51 | 0.59 | 0.55 | 0.53 |

| **Example 12C** | Plain paper setting | | | Glossy paper setting | | |
|---|---|---|---|---|---|---|
| Paper | Cyan | Magenta | Yellow | Cyan | Magenta | Yellow |
| Xerox 4024 | 0.60 | 0.64 | 0.70 | 0.54 | 0.57 | 0.58 |
| Hammermill Copy Plus | 0.60 | 0.67 | 0.77 | 0.53 | 0.61 | 0.62 |
| HP Bright White | 0.70 | 0.76 | 0.86 | 0.62 | 0.71 | 0.68 |
| Great White | 0.58 | 0.63 | 0.69 | 0.52 | 0.54 | 0.56 |
| **Average** | 0.62 | 0.67 | 0.76 | 0.55 | 0.61 | 0.61 |

Efficiency values for each color of each example were averaged, and then an overall average value was obtained for all colors. Results are shown in Table 32 below.

**Table 32 - Performance on Glossy and Non-Glossy Substrates**

| Example # | Average Optical Density Efficiency | Average Gloss |
|---|---|---|
| 12A | 0.64 | 36 |
| 12B | 0.54 | 48.5 |
| 12C | 0.63 | 26 |

Also shown in Table 32 are average gloss values, which were determined for the color images produced on the glossy media using the method described in Example 9. Some of the images produced Example 12C were extremely hazy and no gloss readings could be obtained. Therefore, the average gloss value for this example only includes those images which were not high in haze, making the average gloss value for Example 12C higher than actual.

The data in Table 32 shows that Example 12A, consisting of inkjet inks of the present invention, have high optical density on non-glossy media as well as high gloss on glossy media. This is also true for each individual color of this ink set (see Table 31). The ink set of Example 12B has better gloss but has dramatically lower optical density on plain paper. The ink set of Example 12C shows the same good optical density performance, but has considerably lower gloss (particularly considering that this gloss value is higher than actual due to the haze issue discussed above).

Thus, the inkjet ink composition of the present invention comprising a modified pigment and a comb-branched copolymer dispersant is a versatile ink showing good overall performance on both plain paper and on glossy substrates.

### Preparation of Comparative Inkjet Ink Compositions

Comparative Examples 3-4 describe the preparation of comparative aqueous inkjet ink compositions comprising a conventional pigment and a comb-branched copolymer dispersant.

### Comparative Example 3

An aqueous inkjet ink composition was prepared using a non-modified pigment and a comb-branched copolymer dispersant. Thus, 311.1 gr of a 32.2 wt% aqueous presscake of Pigment Red 122 (commercially available from Sun Chemicals) was mixed with 770 mL of water and 20 mL of a 4500 ppm NaHCO₃ solution in a L4RTA model Silverson rotor-stator mixer for 60 minutes. The resulting 10 wt% aqueous magenta dispersion had a mean volume particle size of 1.539 microns measure using a Honeywell UPA, which is inadequate to be used as an aqueous inkjet ink composition.

To this was added 50 gr of a 40 wt% aqueous solution of Ethacryl™ P20 (20 parts per 100 parts pigment), and the dispersion was mixed in the Silverson rotor-stator for an additional 15 minutes. The resulting dispersion (8.9% solids) had a mean volume particle size of 0.3914 microns, which was further reduced by sonication using a Misomix sonicator with a 0.5 inch diameter tip and a power setting of 9 (18 passes) to 0.1971 microns. The dispersion was concentrated to 9.6% solids using a diafiltration membrane and filtered using a Pall filter to 1 micron, to form a comparative aqueous inkjet ink composition having a mean volume particle size of 0.1823 microns.

After 1 week at 70 degrees C, the comparative aqueous inkjet ink composition separated, indicating very poor stability. By comparison, Cab-O-Jet® 260 M colored pigment dispersion, which is a 10.0 wt% aqueous dispersion of a modified pigment comprising a magenta pigment having attached sulfonic acid groups commercially available from Cabot Corporation, remained stable under the same conditions. In addition, the aqueous inkjet ink compositions of Examples 1-8, which are aqueous inkjet ink compositions of the present invention, also remained stable under these conditions.

Thus, the inkjet ink compositions of the present invention comprising a modified pigment and a comb-branched copolymer dispersant, are stable dispersions, even at this relatively high level of dispersant compared to a comparative composition comprising a pigment which is not a modified pigment that is dispersed with a comb-branched copolymer dispersant.

### Comparative Example 4

An aqueous inkjet ink composition was prepared using a non-modified pigment and a comb-branched copolymer dispersant. Thus, a dispersion was prepared by dissolving 1.05 g of a 40 wt% aqueous solution of Ethacryl™ P2013 in 25.95 g water and then adding 8 g of a magenta presscake (32.2 wt% Pigment Red 122, commercially available from Sun Chemicals). The resulting dispersion was 8 wt % pigment with a dispersant level of 15 parts per 100 parts pigment. The dispersion was allowed to stir overnight with in a beaker with magnetic stirrer bar agitation low shear agitation and was then sonicated for 10 minutes using a Misomix sonicator with a 0.5 inch diameter tip and a power setting of 7, giving a magenta pigment disperion having a mean volume particle size (measured using a Honeywell UPA) of 0.2299 microns. This indicated that the dispersion would be usable as an aqueous inkjet ink composition.

After 14 hours at 60 degrees C, the comparative aqueous inkjet ink composition gelled, indicating very poor stability. By comparison, Cab-O-Jet® 260M colored pigment dispersion, which is a 10.0 wt% aqueous dispersion of a modified pigment comprising a magenta pigment having attached sulfonic acid groups commercially available from Cabot Corporation, remained stable under the same conditions. In addition, the aqueous inkjet ink compositions of Examples 1-8, which are aqueous inkjet ink compositions of the present invention, also remained stable under these conditions.

Thus, the inkjet ink compositions of the present invention comprising a modified pigment and a comb-branched copolymer dispersant, are stable dispersions compared to a comparative composition comprising a pigment which is not a modified pigment that is dispersed with a comb-branched copolymer dispersant.

The foregoing description of preferred embodiments of the present invention has been presented for the purposes of illustration and description. It is not intended to be exhaustive or to limit the invention to the precise form disclosed. Modifications and variations are possible in light of the above teachings, or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. An aqueous inkjet ink composition comprising a) an aqueous vehicle, b) a modified pigment comprising a pigment having attached at least one organic group, and c) at least one comb-branched copolymer dispersant comprising at least one acrylic polymer segment and at least one polyalkylene oxide segment.

2. The aqueous inkjet ink composition of claim 1, wherein the organic group comprises at least one ionic group, at least one ionizable group, or a mixture thereof.

3. The aqueous inkjet ink composition of claim 1, wherein the pigment comprises a blue pigment, a black pigment, a brown pigment, a cyan pigment, a green pigment, a white pigment, a violet pigment, a magenta pigment, a red pigment, a yellow pigment, or mixtures thereof.

4. The aqueous inkjet ink composition of claim 2, wherein the pigment is a cyan pigment, a magenta pigment, a yellow pigment, or a black pigment.

5. The aqueous inkjet ink composition of claim 1, wherein the organic group comprises at least one carboxylic acid group, sulfonic acid group, alkyl sulfate group, alkyl amine group, alkyl ammonium group, or salts thereof.

6. The aqueous inkjet ink composition of claim 1, wherein the organic group is polymeric.

7. The aqueous inkjet ink composition of claim 1, wherein the comb-branched copolymer dispersant comprises an acrylic polymer backbone and at least one polyalkylene oxide sidechain.

8. The aqueous ink jet ink composition of claim 1, wherein the acrylic polymer segment comprises acrylic acid monomer units.

9. The aqueous inkjet ink composition of claim 1, wherein the polyalkylene oxide segment comprises ethylene oxide monomer units.

10. The aqueous inkjet ink composition of claim 9, wherein the polyalkene oxide segment further comprises propylene oxide monomer units.

11. The aqueous inkjet ink composition of claim 1, wherein the comb-branched copolymer dispersant has a molecular weight of from about 1,000 to 100,000.

12. The aqueous inkjet ink composition of claim 1, wherein the comb-branched copolymer dispersant has a molecular weight of from about 5,000 to 80,000.

13. The aqueous inkjet ink composition of claim 1, wherein the comb-branched copolymer dispersant has a molecular weight of from about 10,000 to 50,000.

14. The aqueous inkjet ink composition of claim 1, wherein the aqueous inkjet ink composition comprises greater than or equal to 15 parts of the comb-branched copolymer dispersant to 100 parts modified pigment.

15. The aqueous inkjet ink composition of claim 14, wherein the modified pigment has a particle size of less than or equal to 200 nm in the aqueous inkjet ink.

16. A consumable aqueous ink set comprising an aqueous inkjet ink composition and a substrate, wherein the aqueous inkjet ink composition comprises a) an aqueous vehicle, b) a modified pigment comprising a pigment having attached at least one organic group, and c) at least one comb-branched copolymer dispersant comprising at least one acrylic polymer segment and at least one polyalkylene oxide segment, and wherein:
when the substrate is a glossy substrate, an image produced by printing the aqueous inkjet ink composition onto the glossy substrate has an average gloss value greater than an image produced by printing an aqueous inkjet ink composition which does not comprise a comb-branched copolymer dispersant onto the glossy substrate, and
when the substrate is a non-glossy substrate, an image produced by printing the aqueous inkjet ink composition onto the non-glossy substrate has an optical density value greater than or equal to an image produced by printing an aqueous inkjet ink composition which does not comprise a comb-branched copolymer dispersant onto the non-glossy substrate.

17. The consumable aqueous ink set of claim 16, wherein the glossy substrate is a polymeric sheet or a polymer-coated paper substrate and wherein the non-glossy substrate is plain paper.

18. A method of printing an image onto a substrate comprising the steps of:
i) preparing an aqueous inkjet ink composition comprising a) an aqueous vehicle, b) a modified pigment comprising a pigment having attached at least one organic group, and c) at least one comb-branched copolymer dispersant comprising at least one acrylic polymer segment and at least one polyalkylene oxide segment; and
ii) generating an image by printing the aqueous inkjet ink composition onto a glossy substrate.

19. The method of claim 18, wherein:
when the substrate is a glossy substrate, the image has an average gloss value greater than an image produced by printing an aqueous inkjet ink composition which does not comprise a comb-branched copolymer dispersant onto the glossy substrate, and
when the substrate is a non-glossy substrate, the image has an optical density value greater than or equal to an image produced by printing an aqueous inkjet ink composition which does not comprise a comb-branched copolymer dispersant onto the non-glossy substrate.

20. The method of claim 19, wherein the glossy substrate is a polymeric sheet or a polymer-coated paper substrate and wherein the non-glossy substrate is plain paper.

## Patentansprüche

1. Wässerige Tintenstrahltiritenzusammensetzung, umfassend a) ein wässeriges Vehikel, b) ein modifiziertes Pigment, welches ein Pigment umfasst, an das mindestens eine organische Gruppe gebunden ist, und c) mindestens ein kammartig verzweigtes Copolymer-Dispergiermittel, das mindestens ein Acrylpolymersegment und mindestens ein Polyalkylenoxidsegment umfasst.

2. Wässerige Tintenstrahltintenzusammensetzung nach Anspruch 1, wobei die organische Gruppe mindestens eine ionische Gruppe, mindestens eine ionisierbare Gruppe oder ein Gemisch davon umfasst.

3. Wässerige Tintenstrahltintenzusammensetzung nach Anspruch 1, wobei das Pigment ein blaues Pigment, ein schwarzes Pigment, ein braunes Pigment, ein Cyanpigment, ein grünes Pigment, ein weißes Pigment, ein violettes Pigment, ein Magentapigment, ein rotes Pigment, ein gelbes Pigment, oder Gemische davon umfasst.

4. Wässerige Tintenstrahltintenzusammensetzung nach Anspruch 2, wobei das Pigment ein Cyanpigment, ein Magentapigment, ein gelbes Pigment oder ein schwarzes Pigment ist.

5. Wässerige Tintenstrahltintenzusammensetzung nach Anspruch 1, wobei die organische Gruppe mindestens eine Carbonsäuregruppe, Sulfonsäuregruppe, Alkylsulfatgruppe, Alkylamingruppe, Alkylammoniumgruppe, oder Salze davon umfasst.

6. Wässerige Tintenstrahltintenzusammensetzung nach Anspruch 1, wobei die organische Gruppe polymer ist.

7. Wässerige Tintenstrahltintenzusammensetzung nach Anspruch 1, wobei das kammartig verzweigte Copolymer-Dispergiermittel ein Acrylpolymerrückgrat und mindestens eine Polyalkylenoxidseitenkette umfasst.

8. Wässerige Tintenstrahltintenzusammensetzung nach Anspruch 1, wobei das Acrylpolymersegment Acrylsäuremonomereinheiten umfasst.

9. Wässerige Tintenstrahltintenzusammensetzung nach Anspruch 1, wobei das Polyalkylenoxidsegment Ethylenoxidmonomereinheiten umfasst.

10. Wässerige Tintenstrahltintenzusammensetzung nach Anspruch 9, wobei das Polyalkylenoxidsegment darüber hinaus Propylenoxidmonomereinheiten umfasst.

11. Wässerige Tintenstrahltintenzusammensetzung nach Anspruch 1, wobei das kammartig verzweigte Copolymer-Dispergiermittel ein Molekulargewicht von etwa 1.000 bis 100.000 aufweist.

12. Wässerige Tintenstrahltintenzusammensetzung nach Anspruch 1, wobei das kammartig verzweigte Copolymer-Dispergiermittel ein Molekulargewicht von etwa 5.000 bis 80.000 aufweist.

13. Wässerige Tintenstrahltintenzusammensetzung nach Anspruch 1, wobei das kammartig verzweigte Copolymer-Dispergiermittel ein Molekulargewicht von etwa 10.000 bis 50.000 aufweist.

14. Wässerige Tintenstrahltintenzusammensetzung nach Anspruch 1, wobei die wässerige Tintenstrahltintenzusammensetzung mehr als oder gleich 15 Teile des kammartig verzweigten Copolymer-Dispergiermittels zu 100 Teile modifiziertes Pigment umfasst.

15. Wässerige Tintenstrahltintenzusammensetzung nach Anspruch 14, wobei das modifizierte Pigment in der wässerigen Tintenstrahltinte eine Partikelgröße von weniger als oder gleich 200 nm aufweist.

16. Wässeriges Tintenverbrauchsset, umfassend eine wässerige Tintenstrahltintenzusammensetzung und ein Substrat, wobei die wässerige Tintenstrahltintenzusammensetzung umfasst a) ein wässeriges Vehikel, b) ein modifiziertes Pigment, das ein Pigment umfasst, an das mindestens eine organische Gruppe gebunden ist, und c) mindestens ein kammartig verzweigtes Copolymer-Dispergiermittel, das mindestens ein Acrylpolymersegment und mindestens ein Polyalkylenoxidsegment umfasst, und wobei:
wenn das Substrat ein glänzendes Substrat ist, ein durch Drucken der wässerigen Tintenstrahltintenzusammensetzung auf das glänzende Substrat erzeugtes Bild einen durchschnittlichen Glanzwert aufweist, der größer ist als der eines Bildes, das auf dem glänzenden Substrat durch Drucken einer wässerigen Tintenstrahltintenzusammensetzung erzeugt wird, die kein kammartig verzweigtes Copolymer-Dispergiermittel umfasst, und
wenn das Substrat ein nicht-glänzendes Substrat ist, ein durch Drucken der wässerigen Tintenstrahltintenzusammensetzung auf dem nicht-glänzenden Substrat erzeugtes Bild einen optischen Dichtewert aufweist, der größer oder gleich dem eines Bildes ist, das auf dem nicht-glänzenden Substrat durch Drucken einer wässerigen Tintenstrahltintenzusammensetzung erzeugt wird, die kein kammartig verzweigtes Copolymer-Dispergiermittel umfasst.

17. Wässeriges Verbrauchstintenset nach Anspruch 16, wobei das glänzende Substrat ein polymeres Blatt oder ein Polymer-beschichtetes Papiersubstrat ist und wobei das nicht-glänzende Substrat Normalpapier ist.

18. Verfahren zum Drucken eines Bildes auf einem Substrat, umfassend die folgenden Schritte:
i) Herstellen einer wässerigen Tintenstrahltintenzusammensetzung umfassend a) ein wässeriges Vehikel, b) ein modifiziertes Pigment, das ein Pigment umfasst, an das mindestens eine organische Gruppe gebunden ist, und c) mindestens ein kammartig verzweigtes Copolymer-Dispergiermittel, das mindestens ein Acrylpolymersegment und mindestens ein Polyalkylenoxidsegment umfasst; und
ii) Erzeugen eines Bildes durch Drucken der wässerigen Tintenstrahltintenzusammensetzung auf ein glänzendes Substrat.

19. Verfahren nach Anspruch 18, wobei:
wenn das Substrat ein glänzendes Substrat ist, das Bild einen durchschnittlichen Glanzwert aufweist, der größer ist als der eines Bildes, das auf dem glänzenden Substrat durch Drucken einer wässerigen Tintenstrahltintenzusammensetzung erzeugt wird, welche kein kammartig verzweigtes Copolymer-Dispergiermittel umfasst, und
wenn das Substrat ein nicht-glänzendes Substrat ist, das Bild einen optischen Dichtewert aufweist, der größer oder gleich dem eines Bildes ist, das auf dem nicht-glänzenden Substrat durch Drucken einer wässerigen Tintenstrahltintenzusammensetzung erzeugt wird, welche kein kammartig verzweigtes Copolymer-Dispergiermittel umfasst.

20. Verfahren nach Anspruch 19, wobei das glänzende Substrat ein polymeres Blatt oder Polymer-beschichtetes Papiersubstrat ist und wobei das nicht-glänzende Substrat Normalpapier ist.

## Revendications

1. Composition aqueuse d'encre à jet d'encre comprenant a) un véhicule aqueux, b) un pigment modifié comprenant un pigment auquel est attaché au moins un groupe organique et c) au moins un agent de dispersion copolymère ramifié en peigne comprenant au moins un segment de polymère acrylique et au moins un segment de poly(oxyde d'alkylène).

2. Composition aqueuse d'encre à jet d'encre selon la revendication 1, dans laquelle le groupe organique comprend au moins un groupe ionique, au moins un groupe ionisable ou un mélange de ceux-ci.

3. Composition aqueuse d'encre à jet d'encre selon la revendication 1, dans laquelle le pigment comprend un pigment bleu, un pigment noir, un pigment marron, un pigment cyan, un pigment vert, un pigment blanc, un pigment violet, un pigment magenta, un pigment rouge, un pigment jaune ou des mélanges de ceux-ci.

4. Composition aqueuse d'encre à jet d'encre selon la revendication 2, dans laquelle le pigment est un pigment cyan, un pigment magenta, un pigment jaune ou un pigment noir.

5. Composition aqueuse d'encre à jet d'encre selon la revendication 1, dans laquelle le groupe organique comprend au moins un groupe acide carboxylique, un groupe acide sulfonique, un groupe sulfate d'alkyle, un groupe alkyl amine, un groupe alkyl ammonium où des sels de ceux-ci.

6. Composition aqueuse d'encre à jet d'encre selon la revendication 1, dans laquelle le groupe organique est polymère.

7. Composition aqueuse d'encre à jet d'encre selon la revendication 1, dans laquelle l'agent de dispersion copolymère ramifié en peigne comprend un squelette polymère acrylique et au moins une chaîne latérale de poly(oxyde d'alkylène).

8. Composition aqueuse d'encre à jet d'encre selon la revendication 1, dans laquelle le segment de polymère acrylique comprend des motifs de monomère d'acide acrylique.

9. Composition aqueuse d'encre à jet d'encre selon la revendication 1, dans laquelle le segment de poly(oxyde d'alkylène) comprend des motifs de monomère d'oxyde d'éthylène.

10. Composition aqueuse d'encre à jet d'encre selon la revendication 9, dans laquelle le segment de poly(oxyde d'alkylène) comprend en outre des motifs de monomère d'oxyde de propylène.

11. Composition aqueuse d'encre à jet d'encre selon la revendication 1, dans laquelle l'agent de dispersion copolymère ramifié en peigne a une masse moléculaire d'au moins environ 1 000 à 100 000.

12. Composition aqueuse d'encre à jet d'encre selon la revendication 1, dans laquelle l'agent de dispersion copolymère ramifié en peigne a une masse moléculaire d'au moins environ 5 000 à 80 000.

13. Composition aqueuse d'encre à jet d'encre selon la revendication 1, dans laquelle l'agent de dispersion copolymère ramifié en peigne a une masse moléculaire d'au moins environ 10 000 à 50 000.

14. Composition aqueuse d'encre à jet d'encre selon la revendication 1, dans laquelle la composition aqueuse d'encre à jet d'encre comprend une quantité supérieure ou égale à 15 parties de l'agent de dispersion copolymère ramifié en peigne pour 100 parties de pigment modifié.

15. Composition aqueuse d'encre à jet d'encre selon la revendication 14, dans laquelle le pigment modifié a une taille de particule inférieure ou égale à 200 nm dans l'encre aqueuse à jet d'encre.

16. Ensemble consommable d'encre aqueuse comprenant une composition aqueuse d'encre à jet d'encre et un substrat, dans lequel la composition aqueuse d'encre à jet d'encre comprend a) un véhicule aqueux, b) un pigment modifié comprenant un pigment auquel est attaché au moins un groupe organique et c) au moins un agent de dispersion copolymère ramifié en peigne comprenant au moins un segment de polymère acrylique et au moins un segment de poly(oxyde d'alkylène), dans lequel:
lorsque le substrat est un substrat brillant, une image produite par impression de la composition aqueuse d'encre à jet d'encre sur le substrat brillant a une valeur moyenne de brillance supérieure à une image produite par impression d'une composition aqueuse d'encre à jet d'encre qui ne comprend pas un agent de dispersion copolymère ramifié en peigne sur le substrat brillant, et
lorsque le substrat est un substrat non brillant, une image produite par impression de la composition aqueuse d'encre à jet d'encre sur le substrat non brillant a une valeur de densité optique supérieure ou égale à une image produite par impression d'une composition aqueuse d'encre à jet d'encre qui ne comprend pas un agent de dispersion copolymère ramifié en peigne sur le substrat non brillant.

17. Ensemble d'encre aqueuse consommable selon la revendication 16, dans lequel le substrat brillant est une feuille polymère ou un substrat en papier revêtu d'un polymère et dans lequel le substrat non brillant est du papier ordinaire.

18. Procédé d'impression d'une image sur un substrat comprenant les étapes consistant à:
i) préparer une composition aqueuse d'encre à jet d'encre comprenant a) un véhicule aqueux, b) un pigment modifié comprenant un pigment auquel est attaché au moins un groupe organique et c) au moins un agent de dispersion copolymère ramifié en peigne comprenant au moins un segment de polymère acrylique et au moins un segment de poly (oxyde d'alkylène); et
ii) générer une image par impression de la composition aqueuse d'encre à jet d'encre sur un substrat brillant.

19. Procédé selon la revendication 18, dans lequel:
lorsque le substrat est un substrat brillant, l'image a une valeur moyenne de brillance supérieure à une image produite par impression d'une composition aqueuse d'encre à jet d'encre qui ne comprend pas un agent de dispersion copolymère ramifié en peigne sur le substrat brillant et
lorsque le substrat est un substrat non brillant, l'image a une valeur de densité optique supérieure ou égale à une image produite par impression d'une composition aqueuse d'encre à jet d'encre qui ne comprend pas d'agent de dispersion copolymère ramifié en peigne sur le substrat non brillant.

20. Procédé selon la revendication 19, dans lequel le substrat brillant est une feuille polymère ou un substrat en papier revêtu d'un polymère et dans lequel le substrat non brillant est un papier ordinaire.
